# EUROPÄISCHE PATENTANMELDUNG

(11) **EP 4 836 368 A1**
(43) Veröffentlichungstag der Anmeldung: **04.11.2026**
(21) Anmeldenummer: 26175170.5
(22) Anmeldetag: 28.04.2026
(51) Int. Cl.: H04L 41/14, H04L 43/08, H04L 43/12, H04L 43/50, H04L 12/40, H04L 12/413, H04L 43/028

(54) **NETZANALYSEGERÄT FÜR NETZWERKE NACH DEM ETHERNET-STANDARD**

(30) Priorität: 30.04.2025 DE 102025001461
(71) Anmelder: Mesco Engineering AG, 4125 Riehen (CH)
(72) Erfinder: Gehringer, Rolf, 79787 Lauchringen (DE)
(74) Vertreter: Petersen, Frank

(57) **Zusammenfassung**

Die Erfindung betrifft ein Netzanalysegerät (300) für Netzwerke mit wenigstens einem Host (100) und wenigstens einem Client (200) nach dem Ethernet-Standard für Single-Pair-Ethernet (SPE) und Advanced-Physical-Layer (APL), das eine Datenauskopplungsstufe (320) aufweist, die einen hostseitigen Signal-Eingangs-Port (330) und einen clientseitigen Signal-Ausgangs-Port (340) aufweist, sowie zwei **SPE/APL** Transmitter/Receiver Einheiten ["Transceiver"] (321, 324), die kreuzgekoppelt sind, so dass Sende- und Empfangssignale von Host (100) und Client (200) separiert und über einen Auskopplungs-Port (350) ausgegeben werden können.

## Beschreibung

Die Erfindung betrifft ein Netzanalysegerät für Netzwerke nach dem Ethernet-Standard IEEE 802.3cg-2019 10BASE-T1L für Single-Pair-Ethernet (SPE) bzw. Advanced-Physical-Layer (APL).

SPE bzw. APL (im Folgenden auch zusammengefasst als SPE/APL) ermöglicht eine Ethernet Datenübertragung über 2-Draht-Leitungen. Dabei ermöglicht SPE/APL zusätzlich, die angeschlossen Geräte mit Energie zu versorgen. Dies führt dazu, das SPE/APL vermehrt in der Prozessindustrie eingesetzt wird. Entsprechende Geräte und Standards sind vorhanden.

Jetzt ist es aber gelegentlich notwendig, übertragene Daten sei es für die Entwicklung, oder die Inbetriebsetzung als auch im Betrieb von Geräten analysieren zu können, z.B. auch für eine Fehlersuche. Dafür müssen die Daten an Analysegeräte geführt werden, die sie analysieren oder anzeigen oder auch für Testzwecke verändern können.

Für klassische Ethernet Standards, z.B. Gigabit Ethernet IEEE 802.3ab, gibt es Geräte, die in der Lage sind, auf der Ethernet-Leitung übertragene Datenpakete durch einen sogenannten Ethernet-Test-Access Point (Ethernet TAP) abzugreifen.

Die derart abgegriffenen Daten können dann gespeichert oder gegebenenfalls auch über einen zusätzlichen Ethernet-Port einem externen Analysegerät zugeführt werden, wobei dieser Ethernet-Port typischerweise eine höhere Datenrate hat als die überwachte Leitung. Ethernet TAPs für klassisches Ethernet sind Stand der Technik.

Entsprechende Ethernet TAPs sind für SPE/APL nicht verwendbar.

Dies liegt insbesondere daran, dass SPE/APL im Gegensatz zu klassischem Ethernet keine getrennten Kanäle bzw. Leitungen verwendet, um Sendedaten als Sendesignal von einem Host an einen Client zu senden und um Empfangsdaten in der Gegenrichtung als Empfangssignal von einem Client zu einem Host zu senden, sondern diese Sende- und Empfangsdaten werden auf einem Kanal bzw. einer Leitung gebündelt.

Ein Beobachter, der lediglich das Signal auf dem SPE-Leitungspaar abgreift, sieht aber immer nur das Summensignal, das sich durch die Überlagerung aus Sende- und Empfangssignal ergibt. Hinzu kommt, dass außerdem die Energieversorgung (Power Over Data Line "PoDL") über das Leitungspaar erfolgt, was das Summensignal evtl. auch noch beeinflussen kann.

Der Realisierung eines Ethernet TAPs für SPE/APL steht damit also die besondere Eigenschaft des SPE/APL Standards nach IEEE 802.3cg-2019 im Wege, dass auf einem Leitungspaar eine bidirektionale Datenübertragung im Voll-Duplex Betrieb realisiert wird, wobei sich die Sende- und Empfangssignale der beiden durch Host und Client gebildeten Endpunkte überlagern.

Im Normalfall erfolgt am Host zur Analyse der Empfangsdaten die Separierung der Signale bei SPE mit Hilfe der sogenannten Echokompensation: Dabei wird aus dem Summensignal das Empfangssignal von dem lokal erzeugten - und somit bekannten - Sendesignal getrennt und steht somit separiert zur Analyse zur Verfügung.

Für eine Analyse von Daten wäre es am sinnvollsten, wenn die SPE/APL-Sende- und Empfangsdaten an einem Switch abgegriffen würden, der einen diesbezüglich konfigurierbaren Port bereitstellt, auf den die übertragenen Daten hierfür gespiegelt werden.

Der Host, der auch die Energieversorgung für den Client bereitstellt, könnte einen Switch auch intern enthalten, der die Sendesignale abgreift und gespiegelt an einem nicht für das eigentliche SPE/APL benötigten Port bereitstellt, bevor sie sich mit den Empfangssignalen überlagern.

Abgesehen davon, dass bei integrierten Anwendungen solch ein Spiegel-Port normalerweise nicht vorhanden oder nicht konfiguriert ist, ist es in der Praxis außerdem so, dass der Betreiber einer Anlage häufig nicht wünscht, dass ein ggf. vorhandener Switch eines Hosts im Betrieb umkonfiguriert wird, um den Betrieb der Anlage nicht zu gefährden.

Hinzu kommt, dass ein Host örtlich evtl. sehr weit, d.h. bis zu mehreren hundert Meter, vom Client entfernt ist, mit dem die Kommunikation untersucht werden soll. Es kann also sein, dass für einen Beobachter, der diese Kommunikation analysiert, ein unmittelbarer Zugriff auf den Host und einen dort ggf. vorhandenen Port aus räumlichen Gründen nicht möglich ist.

Für einen Beobachter, der das Signal also nicht am Host, sondern an einer beliebigen Stelle auf dem SPE-Leitungspaar abgreift, ist somit nur das Summensignal zu ermitteln. Eine Trennung bzw. ein Dekodieren der Signale, ist ohne Kenntnis von Sende- oder Empfangssignal demnach nur schwierig zu realisieren

Unter diesen Aspekten besteht die Aufgabe der vorliegenden Erfindung darin, ein Netzanalysegerät anzugeben, mit dem die über eine SPE/APL Leitung zwischen einem Host und einem Client bidirektional übertragenen Datenströme separiert auszukoppeln sind.

Hierzu weist ein erfindungsgemäßes Netzanalysegerät eine Datenauskopplungsstufe auf, die einen hostseitigen Signal-Eingangs-Port und einen clientseitigen Signal-Ausgangs-Port aufweist, sowie zwei SPE/APL Transmitter/Receiver Einheiten ("Transceiver"), die kreuzgekoppelt sind, wobei jeder der Transceiver wenigstens einen Ein- und Ausgangs-Port, einen Eingangs-Port und einen Ausgangsport aufweist, wobei das hostseitig abgegriffene Summensignal vom hostseitigen Signal-Eingangs-Port auf den Ein- und Ausgangs-Port des ersten Transceivers geleitet ist und das clientseitig abgegriffene Summensignal vom clientseitigen Signal-Ausgangs-Port auf den Ein- und Ausgangs-Port des zweiten Transceivers und das Ausgangssignal des ersten Transceivers über eine erste Auskopplungseinheit zur Differenzbildung mit dem clientseitig abgegriffene Summensignal auf den Eingang des zweiten Transceivers und das Ausgangssignal des zweiten Transceivers über eine zweite Auskopplungseinheit zur Differenzbildung mit dem hostseitig abgegriffene Summensignal auf den Eingang des ersten Transceivers, wobei die beiden Ausgangssignale auf einen Auskopplungs-Port gespiegelt werden, und wobei der Ein- und Ausgabe-Port des zweiten Transceivers ein dem hostseitig abgegriffenen Summensignal entsprechendes erstes Ersatzsignal an den Signal-Ausgangs-Port leitet und der Ein- und Ausgabe-Port des ersten Transceivers ein dem clientseitig abgegriffenen Summensignal entsprechendes zweites Ersatzsignal an den Signal-Eingangs-Port leitet.

Die erste und die zweite Auskopplungseinheiten können sowohl getrennt als auch gemeinsam in einer einzelnen Auskopplungseinheit realisiert werden.

Durch das Einschleifen dieses Netzanalysegerätes in die Leitung zwischen Host und Client liegen am Auskopplungs-Port die Sende- und die Empfangsdaten getrennt vor und sind so einfach analysierbar, wobei gleichzeitig durch die Ersatzsignale die Kommunikation zwischen Host und Client aufrechterhalten wird.

Dadurch, dass das Netzanalysegerät in die Leitung zwischen Host und Client eingeschleift wird, liegen am hostseitigen Signal-Eingangs-Port und am clientseitigen Signal-Ausgangs-Port unterschiedliche Summensignale an, wobei diese Unterschiede für die im Netzanalysegerät u.a. erfolgende Verarbeitung relevant ist, an dessen Ende am Auskopplungs-Port die Sende- und die Empfangsdaten getrennt bereitgestellt werden können.

Die angesprochenen Ersatzsignale, mit denen die Kommunikation über das Netzanalysegerät hinweg zwischen Host und Client aufrechterhalten wird, entsprechen vor bzw. nach dem Netzanalysegerät von ihrem Dateninhalt her den von ihnen ersetzten Summensignalen, auch wenn die physikalische Integrität der Signale dabei nicht 100 %-ig gewahrt bleibt. Die Änderungen sind dabei aber so gering, dass die Nutzdaten nicht von den der Kommunikations-überwachung dienenden Protokollen als Fehler identifiziert werden.

Die Erfindung hat dabei den Vorteil, dass sie mit Hilfe von handelsüblichen integrierten Schaltkreisen aufgebaut werden kann, wodurch sie betriebssicher und preiswert realisierbar ist.

Aus der DE 10 2021 202 932 A1 ist zwar bereits eine Schaltung mit sowohl client- als auch host-seitigen Transceivern zum Einschleifen in eine Ethernet-Übertragungsleitung bekannt, jedoch wird über diese Transceiver nur ein Gleichstrom in den Datenstrom aus- bzw. eingekoppelt und es wird keine Paketheaderanalyse zur Datenfilterung vorgenommen. Damit wird aber das erfindungsgemäß wesentliche zusätzliche Auftrennen der beiden Übertragungsrichtungen durch interne Differenzbildung der client- und host-seitigen Summensignale im Netzanalysegerät sowie das anschließende Ausspiegeln vorbestimmter einzelner Datenpakete an einem hierfür vorgesehenen Ausgangsport des Netzanalysegerätes nicht offenbart.

Bei einer besonders bevorzugten Ausführungsform weist das Netzanalysegerät eine Energieextraktionseinheit auf, die die Energie, die vom Host eingespeist wird, am Signal-Eingangs-Port extrahiert. Des Weiteren ist dann eine Energieeinspeiseeinheit vorgesehen, die die extrahierte Energie am Signal-Ausgangs-Port wieder einspeist.

Damit kann insbesondere erreicht werden, dass die überlagerten Signale separiert werden, ohne die Energieübertragung "PoDL" zu stören. Außerdem kann auch die Signalverarbeitung in den Transceivern ohne Beeinflussung durch das PoDL erfolgen.

Es ist dabei möglich, dass die von der Energieextraktionseinheit extrahierte Energie teilweise für den Betrieb des Netzanalysegerätes genutzt wird und somit die Energieeinspeiseeinheit die extrahierte Energie in entsprechend verringertem Umfang am Signal-Ausgangs-Port wieder einspeist.

Das Netzanalysegerät kann optional auch eine Manipulationseinheit aufweisen, über die die Ausgangssignale eines Transceivers oder beider Transceiver verändert werden können, um damit die Robustheit der Kommunikation zwischen Host und Client und/oder deren planmäßiges Zusammenwirken zu testen.

Des Weiteren kann die Energieversorgung des Netzanalysegeräts und des am Signal-Ausgangs-Port angeschlossenen Client auch über einen zusätzlichen Versorgungsspannungseingang erfolgen. Damit ist es bedarfsweise auch möglich, die Energieversorgung für den Client unabhängig vom Host bereitzustellen, was bei der Durchführung von Tests sinnvoll sein kann

Weitere Merkmale und Vorteile der Erfindung ergeben sich aus der nachfolgenden Beschreibung der beigefügen Zeichnung. Dabei zeigt
- Fig. 1.:: die Prinzipskizze eines Netzwerkes nach dem Ethernet-Standard für Single-Pair-Ethernet (SPE) und Advanced-Physical-Layer (APL) mit integriertem Netzanalysegerät,
- Fig. 2.:: die Prinzipskizze eines Netzanalysegerätes.

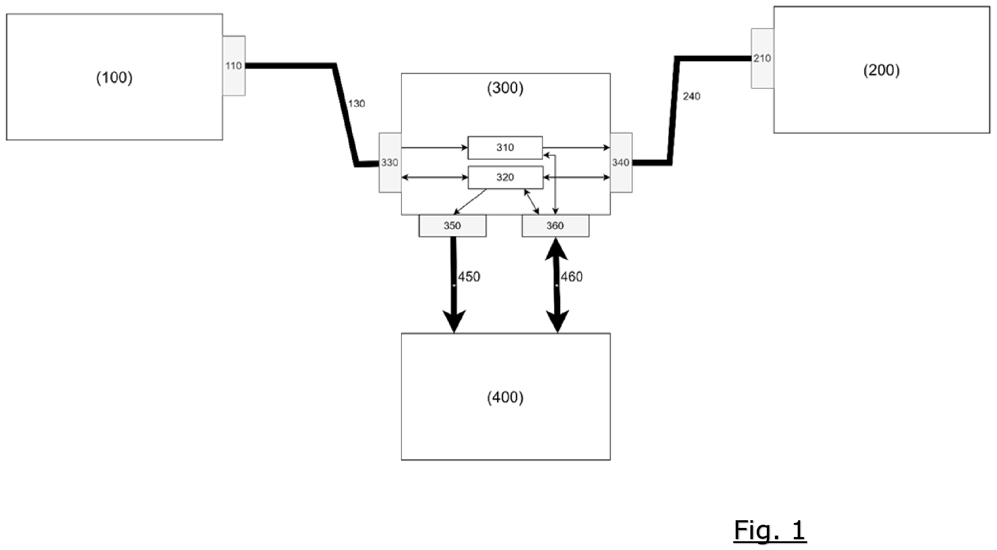

In der Fig. 1 ist ein Netzwerk mit integriertem Netzanalysegerät dargestellt.

Ein Host 100 und ein Client 200 als Netzgeräte sind mit SPE/APL Schnittstellen 110 bzw. 210 ausgestattet, an die SPE/APL Signalleitungen 130 bzw. 240 angekoppelt sind, wobei vom Host 100 über "PoDL" Energie zur Stromversorgung an den Client 200 geleitet wird.

Anstelle eines passiven Abgriffs des Übertragungssignals wird in diese ein Netzanalysegerät 300 eingekoppelt, so dass das Übertragungssignal durch das Netzanalysegerät 300 hindurchgeleitet wird.

Dieses Netzanalysegerät 300 verfügt neben zwei SPE/APL Ports, einem hostseitigen Signal-Eingangs-Port 330 und einem clientseitigen Signal-Ausgangs-Port 340, über einen Auskopplungs-Port 350, wobei dieser vorzugsweise aus einem oder zwei klassischen Ethernet Anschlüssen besteht. Auf diesem Auskopplungs-Port 350 werden die Signaldaten, die vom Host 100 zum Client 200 gesandt werden und die Daten, die in Gegenrichtung vom Client 200 zum Host 100 übertragen werden, als Ausgangssignale geführt.

Die Auskopplung erfolgt dabei durch eine integrierte Datenauskopplungsstufe 320, die die SPE/APL Signale dekodiert, verarbeitet und wieder enkodiert. Dies wird weiter unten näher erläutert.

Das Netzanalysegerät 300 verfügt optional über einen Management-Port 360. Auch dessen Funktion wird weiter unten noch einmal erläutert.

Das Netzanalysegerät 300 weist eine Energiekoppelstufe 310 auf, welche die Energie, die vom Host 100 eingespeist wird, extrahiert, gegebenenfalls einen kleinen Teil zur Selbstversorgung entnimmt und wieder in den Signal-Ausgangs-Port 340 einspeist.

Dieses Verfahren kann mit Hilfe von Standard SPE/APL Schnittstellenbausteinen realisiert werden und erfordert keine aufwändige Messtechnik oder Analysesoftware.

Durch das Einschleifen des Netzanalysegeräts 300 wird das übertragene SPE/APL Signal in beiden Richtungen verzögert. Diese Verzögerung ist jedoch in der überwiegenden Zahl der Anwendungsfälle unproblematisch, da Ethernet Signale in der Regel über mehrere Zwischenstationen (Router, Switches) weitergeleitet werden, die die übertragenen Signale ebenfalls verzögern.

Für die hier relevanten Anwendungen der Protokollanalyse ist eine Aufrechterhaltung der physikalischen Integrität der Signale nicht notwendig.

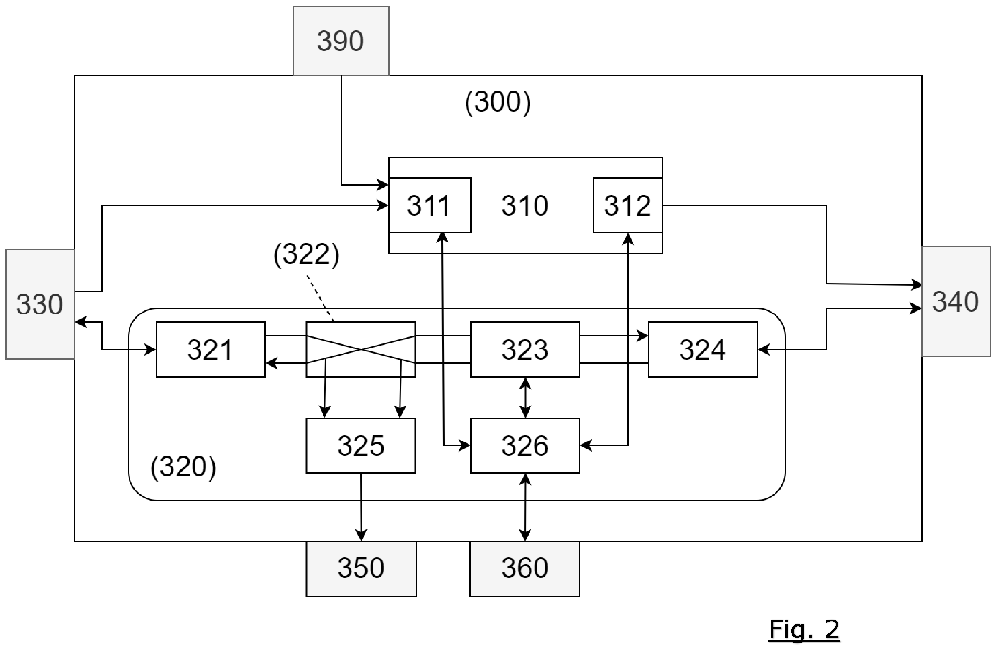

Die detaillierte Realisierung des Netzanalysegeräts 300 ist in Figur 2 dargestellt.

Der Signal-Eingangs-Port 330 empfängt ein SPE/APL Signal welches intern an die Energiekoppelstufe 310 und das Datenauskopplungsstufe 320 geführt wird.

Die Energiekoppelstufe 310 enthält eine Energieextraktionseinheit 311, welche die Energie aus dem eingangsseitigen SPE/APL Signal auskoppelt, und eine Energieeinspeiseeinheit 312, welche die ausgekoppelte Energie ganz oder teilweise in das ausgangsseitige SPE/APL Signal, das über den Signal-Ausgangs-Port 340 geführt wird, einkoppelt. Die dabei angewandten Verfahren zur Auskopplung und Einkopplung der Energie sind Stand der Technik und bedürfen hier keiner weiteren Erläuterung.

Die Datenauskopplungsstufe 320 enthält zwei SPE/APL Transmitter/Receiver Einheiten "Transceiver" 321 und 324, welche kostengünstig mit Hilfe von integrierten Schaltkreisen aufgebaut werden können. Entsprechende Integrierte Schaltkreise werden beispielsweise von der Firma Texas Instruments unter der Bezeichnung DP83TD510E oder von der Firma Analog Device unter der Bezeichnung ADIN1100 als sogenannte Ethernet PHY angeboten.

Diese integrierten Schaltkreise sind komplexe Chips, die unter anderem eine Kodierung und Dekodierung der PAM3 kodierten SPE/APL Signale durchführen, und ggf. zusätzlich auch über Funktionen verfügen, um Leitungen einzumessen und/oder bei Bedarf eine Fehlerortung durchzuführen und um die bidirektionalen SPE/APL Signale in ein Ausgangssignal "Tx" und ein Eingangssignal "Rx" aufzutrennen.

Das Ausgangssignal des ersten Transceivers 321 wird über eine Auskopplungseinheit 322 und eine optionale Manipulationseinheit 323 an den Eingang des zweiten Transceivers 324 geführt.

Das Ausgangssignal des zweiten Transceivers 324 wird über die optionale Manipulationseinheit 323 und die Auskopplungseinheit 322 auf den Eingang des ersten Transceivers 321 geführt.

Durch diese Kreuzkopplung wird am Signal-Ausgangs-Port 340 eine verzögerte Version der am Signal-Eingangs-Port 330 empfangenen SPE-Eingangsdaten bereitgestellt - und am Signal-Eingangs-Port 330 eine verzögerte Version der am Signal-Ausgangs-Port 340 empfangenen Daten bereitgestellt. Die hierbei auftretende Verzögerung entsteht durch die in den Transceiver-Bausteinen erforderliche Signalverarbeitung.

Die Auskopplungseinheit 322 ist als Baugruppe einfach realisierbar, da die auszukoppelnden Signale an ihr in einer sich nicht überlagernden Form vorliegen. Diese Auskopplungseinheit erzeugt dabei von den über sie geführten Ausgangssignalen gespiegelte Versionen.

Eine Kombinationsbaugruppe 325 kombiniert die beiden in ihren gespiegelten Versionen ausgekoppelten Ausgangssignale zu einem Test-Access-Point-Signal, das mit typischerweise doppelter Datenrate an den Auskopplungs-Port 350 geleitet wird, von wo sie über eine Datenleitung 450 an einen Rechner 400 zur Auswertung geleitet werden

Über die optionale Manipulationseinheit 323 können an den übertragenen Daten gezielt Änderungen vorgenommen werden, wodurch das hier beschriebene Netzanalysegerät mit zusätzlichen Funktionalitäten versehen werden kann.

Über einen Management-Port 360, der typischerweise als USB-Port ausgeführt ist, erfolgt insbesondere vom Rechner 400 aus über eine Steuerleitung 460 die Verwaltung des Netzanalysegeräts in der Verwaltungseinheit 326.

Der Management-Port 360 dient dabei vor allem zur Steuerung, Modifikation und Überwachung der Energiekoppelstufe 310 des Netzanalysegeräts 300. Dabei kann bedarfsweise auch die Energieversorgung des Client 200 über die mit dem Signal-Ausgangs-Port 340 verbundene SPE/APL Signalleitung 240 ganz ein- oder abgeschaltet werden, um im Prüffeld Reaktionen des Client 200 zu testen. Hierzu muss man auch wissen, dass ein Client ggf. auch noch Daten zurücksenden kann, auch wenn seine Energieversorgung unterbrochen wird.

In gleicher Weise kann auch die Manipulationseinheit 323 über die Verwaltungseinheit 326 angesteuert werden. Als weitere Funktionalität kann die Verwaltungseinheit 326 auch genutzt werden zur Bereitstellung von Messwerten.

Optional kann die Energieversorgung des Netzanalysegeräts 300 und des am Signal-Ausgangs-Port 340 angeschlossenen Client 200 auch über einen zusätzlichen Versorgungsspannungseingang 390 erfolgen. In diesem Fall ist es nicht notwendig, für den Betrieb des Netzanalysegeräts 300 auf Energie zurück zu greifen, die durch die Energiekoppelstufe 310 mit der Energieextraktionseinheit 311

Das vorliegende Netzanalysegerät ermöglicht eine kontinuierliche Überwachung der Daten und Energieversorgung der SPE - Leitung. Durch Manipulation der Daten auf dieser SPE-Leitung kann beispielsweise auch die Robustheit von entwickelten Clients geprüft werden.

### Bezugszeichenliste

- 100: Host
- 110: SPE/APL Schnittstelle
- 130: SPE/APL Signalleitung
- 200: Client
- 210: SPE/APL Schnittstelle
- 240: SPE/APL Signalleitung
- 300: Netzanalysegerät
- 310: Energiekoppelstufe
- 311: Energieextraktionseinheit
- 312: Energieeinspeiseeinheit
- 320: Datenauskopplungsstufe
- 321: erster Transceiver
- 322: Auskopplungseinheit
- 323: Manipulationseinheit
- 324: zweiter Transceiver
- 325: Kombinationsbaugruppe
- 326: Verwaltungseinheit
- 330: Signal-Eingangs-Port
- 340: Signal-Ausgangs-Port
- 350: Auskopplungs-Port
- 360: Management-Port
- 390: Versorgungsspannungseingang
- 400: Rechner
- 450: Datenleitung
- 460: Steuerleitung

## Patentansprüche

1. Netzanalysegerät (300) für Netzwerke mit wenigstens einem Host (100) und wenigstens einem Client (200) nach dem Ethernet-Standard für Single-Pair-Ethernet (SPE),
**dadurch gekennzeichnet,**
**dass** es eine Datenauskopplungsstufe (320) aufweist, die einen host-seitigen Signal-Eingangs-Port (330) und einen clientseitigen Signal-Ausgangs-Port (340) aufweist, sowie zwei SPE/APL Transmitter/Receiver Einheiten ["Transceiver"] (321, 324), die kreuzgekoppelt sind, wobei jeder der Transceiver (321, 324) wenigstens einen Ein- und Ausgangs-Port, einen Eingangs-Port und einen Ausgangsport aufweist,
wobei das hostseitig abgegriffene Summensignal vom hostseitigen Signal-Eingangs-Port (330) auf den Ein- und Ausgangs-Port des ersten Transceivers (321) geleitet ist und
das clientseitig abgegriffene Summensignal vom clientseitigen Signal-Ausgangs-Port (340) auf den Ein- und Ausgangs-Port des zweiten Transceivers (324) und
das Ausgangssignal des ersten Transceivers (321) über eine Auskopplungseinheit (322) zur Differenzbildung mit dem clientseitig abgegriffene Summensignal auf den Eingang des zweiten Transceivers (324) und
das Ausgangssignal des zweiten Transceivers (324) über die Auskopplungseinheit (322) zur Differenzbildung mit dem hostseitig abgegriffene Summensignal auf den Eingang des ersten Transceivers (321),
wobei die beiden Ausgangssignale auf einen Auskopplungs-Port (350) gespiegelt werden, und
wobei der Ein- und Ausgabe-Port des zweiten Transceivers (324) ein dem hostseitig abgegriffenen Summen-Signal entsprechendes erstes Ersatzsignal an den Signal-Ausgangs-Port (340) leitet und
der Ein- und Ausgabe-Port des ersten Transceivers (321) ein dem clientseitig abgegriffenen Summensignal entsprechendes zweites Ersatzsignal an den Signal-Eingangs-Port (330) leitet.

2. Netzanalysegerät gemäß Anspruch 1,
**dadurch gekennzeichnet,**
**dass** es eine Energieextraktionseinheit (311) aufweist, die Energie, die vom Host (100) eingespeist wird, am Signal-Eingangs-Port (330) extrahiert.

3. Netzanalysegerät gemäß Anspruch 2,
**dadurch gekennzeichnet**,
es eine Energieeinspeiseeinheit (312) aufweist, die am Signal-Eingangs-Port (330) extrahierte Energie am Signal-Ausgangs-Port (340) wieder einspeist.

4. Netzanalysegerät gemäß Anspruch 1,
**dadurch gekennzeichnet,**
**dass** es wenigstens eine Manipulationseinheit (323) aufweist, über die die Ausgangssignale eines Transceivers (321; 324) oder beider Transceiver (321, 324) veränderbar sind.

5. Netzanalysegerät gemäß einem der vorstehenden Ansprüche, **dadurch gekennzeichnet,**
**dass** es einen Versorgungsspannungseingang (390) aufweist zu seiner Energieversorgung und des Clients (200).
